# EUROPEAN PATENT SPECIFICATION

(11) **EP 3 429 892 B1**
(45) Date of publication and mention of the grant of the patent: **22.09.2021**
(21) Application number: 17782783.9
(22) Date of filing: 24.02.2017
(51) Int. Cl.: B60R 1/066, B60R 1/00, B60R 1/02, B60R 1/076, F16C 11/06, F16D 1/12, F16M 11/02

(54) **BALL-AND-SOCKET JOINT MODULE FOR MIRROR HEAD**
KUGELGELENKMODUL FÜR SPIEGELKOPF
MODULE D'ARTICULATION À ROTULE POUR TÊTE DE MIROIR

(30) Priority: 11.04.2016 US 201662321002 P
(43) Date of publication of application: 23.01.2019
(73) Proprietor: Electronic Controls Company, Boise, ID 83705 (US)
(72) Inventor: STEWART, David, Norton Malton Yorkshire YO17 8AE (GB); SHARP, Andrew, Bridlington Yorkshire YO16 7BG (GB)
(74) Representative: Hanna Moore + Curley
(86) International application number: PCT/US2017/019500
(87) International publication number: WO 2017/180249

(56) References cited:
- US-A- 1 933 909
- US-A- 2 545 406
- US-A- 4 401 289
- US-A- 5 621 577
- US-A1- 2004 227 049
- US-A1- 2015 098 144
- US-B1- 6 302 549

## Description

### RELATED APPLICATION

This application claims benefit of U.S. Provisional Patent Application No. 62/321,002, filed April 11, 2016

### TECHNICAL FIELD

This disclosure relates generally to a mirror-adjustment mechanism and, more particularly, to a ball-and-socket joint module affixed to a mirror head for adjusting a position of a mirror.

### BACKGROUND INFORMATION

Conventional mirror-adjustment mechanisms have included a moveable mirror-mount assembly that is held together by an elongate cylindrical member (e.g., a bolt or rod) passing through a coil or helical spring along its longitudinal axis. For example, Pub. No. US 2015/0098144 A1 of Kim et al. describes a side-view mirror having a ball-and-socket joint maintained under tension by use of a connection bar terminating in a mirror-adjustment lever. The lever serves to retain a spring that slides along a longitudinal axis of the connection bar. U.S. Patent No. 8,246,266 of Lang et al. describes a mirror-adjustment mechanism that also includes a spring- and-bolt combination to maintain tension on a ball-and-socket joint. Similar examples of this configuration include Pub. No. WO 2005/007455 A1 of Ro, U.S. Patent No. 4,401,289 of Fisher et al., and U.S. Patent No. 6,302,549 of Branham et al. describing, respectively, posts, studs, and bolts maintaining spring tension for joints of various mirror-adjustment mechanisms.

Common to the aforementioned approaches are axial members (e.g., a bolt, stud, post, or cylindrical bar) extending into an opening of a ball-and-socket joint and through a spring so that the axial member may fasten and compress the spring toward a bearing surface of the joint, thereby producing spring tension that maintains the mirror adjustment position.

Furthermore, some prior art ball-and-socket joint adjustment mechanisms are limited for exclusive use in adjusting automobile side-view mirrors, which typically have mirror glass that is not-and need not be-rotatable within a rigid mirror housing. In other words, some automobile side-view mirror designs do not address a fundamental problem of unimpeded rotation about a ball. Instead, some of these designs specifically include trunnions (i.e., rails) and corresponding guide channels integral to the ball-and-socket joint that are actually intended to inhibit the free circumduction and rotation of a mirror so as to attempt to improve stability upon adjustment.

United States Patent Application US 2545406 discloses a ball-joint mounting, and is concerned with the provision of a ball and socket joint to support, upon a stem equivalent element, a member of any desired characteristics for limited, and friction-resisted, universal movement relative thereto. The mounting of the present invention Is adapted for use in supporting, for such movement, any kind of object; and in particular in connection with the mounting of a rear-view mirror for automobiles.

### SUMMARY OF THE DISCLOSURE

The mirror assembly as described in claim 1 comprises a ball-and-socket system using a compression spring to allow for consistent loads over wide temperature ranges, resulting in a constant torque for a manually adjustable mirror head of a mirror assembly. The stiffness of the joint and the force necessary for its adjustment are fairly consistent across a wide temperature range and throughout the useful life of the components forming the joint.

Accordingly, an advantage of the system is that it allows the mirror assembly to work at a predefined torque regardless of temperature variations, material creep, and component wear. The system also provides for more consistent and repeatable results.

Additional aspects and advantages will be apparent from the following detailed description of embodiments, which proceeds with reference to the accompanying drawings.

### BRIEF DESCRIPTION OF THE DRAWINGS

FIGS. 1 and 2 are, respectively, frontal and rear-perspective pictorial views of a mirror assembly including a ball-and-socket joint module that is shown in FIG. 2 as having a flush-mounted retainer mounted within a back side of a mirror housing.
FIG. 3 is a rear perspective pictorial view of the ball-and-socket joint module of FIG. 2 spatially aligned for installation in a two-level depression of the mirror housing of each one of a group of three mirror head embodiments.
FIGS. 4 and 5 are exploded views of, respectively, the back and front of the mirror assembly of FIGS. 1 and 2, the mirror assembly shown in FIG. 5 with its mirror (glass) removed.
FIG. 6 is a fragmentary isometric solid-model rendering showing a detailed view of the module of FIGS. 2-5 and of its nested components.
FIGS. 7 and 8 are, respectively, rear and fragmentary isometric solid-model renderings of a typical manual adjustment device showing an example of non-adjustable loading.
FIG. 9 is a pair of isometric views of two halves of a tubular insert, showing the two halves side-by-side with the right-side half presented as an exploded view, the two halves providing a cylindrical tube by which to receive a mirror-mounting shaft of a vehicle for mounting the mirror assembly.

### DETAILED DESCRIPTION OF EMBODIMENTS

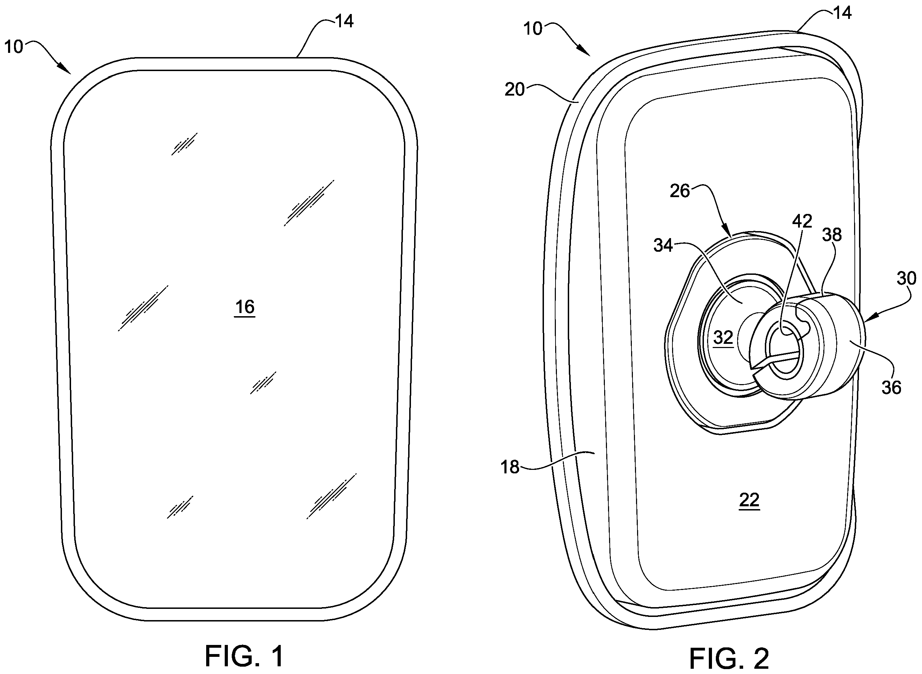

FIGS. 1 and 2 show a mirror assembly 10 including a mirror head 14 carrying a mirror 16 (FIG. 1) mounted in a mirror housing 18 (FIG. 2). Mirror 16 is held in place within housing 18 by a rubber or elastomeric seal 20 that binds the perimeter of mirror 16 to that of housing 18. FIG. 2 also shows a back side 22 of housing 18 that receives a ball-and-socket joint module 26 for adjusting the position of mirror head 14.

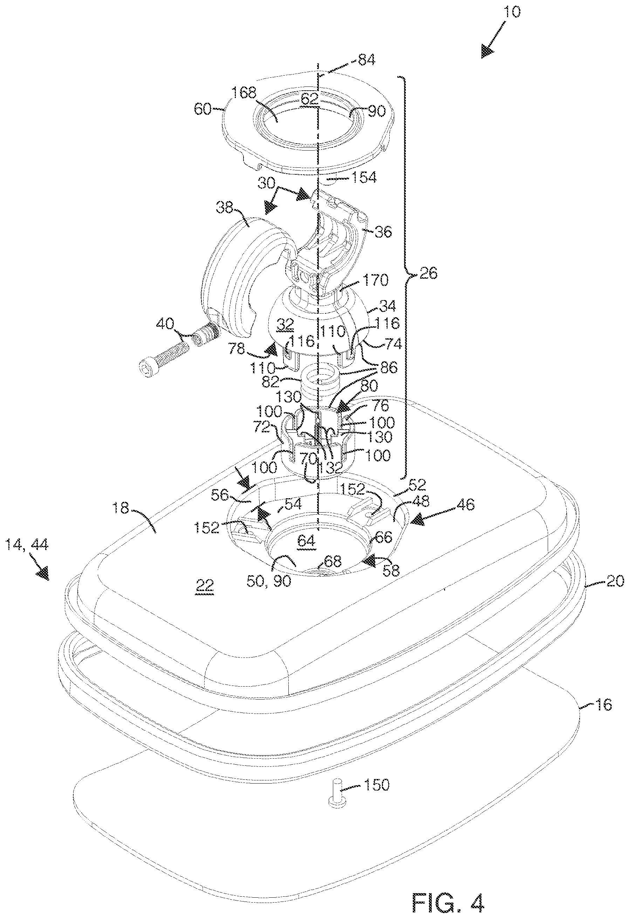

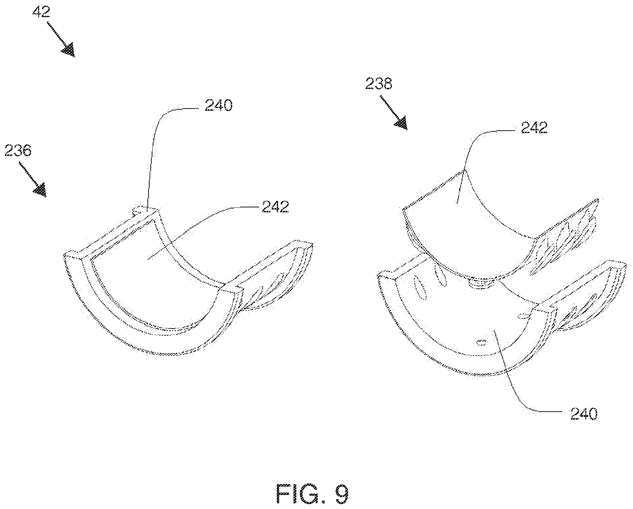

A clamp 30 extending from an outer surface 32 of a cup 34 in the form of a hemispherical segment of module 26 provides an attachment point for attaching mirror assembly 10 to a mirror-mounting shaft (not shown) of a vehicle. Clamp 30 is formed by a first arcuate clamp portion 36 and a second arcuate clamp portion 38 that are held together by a set screw fastener 40 (FIGS. 4-6). Clamp portion 36 is an integral part of cup 34. Set screw fastener 40 closes clamp 30. Set screw fastener 40 has a single bolt to reduce installation time and errors. An optional two-piece insert 42 (described later with reference to FIG. 9) has two halves that form a cylindrical tube configured to receive the mirror-mounting shaft of a vehicle. Insert 42 and clamp 30, which are adjustable to accommodate shafts of about 16 mm in diameter to about 32 mm in diameter, allow mirror head 14 to be mounted at any angle (i.e., 360°) about a mirror-mounting shaft of a vehicle.

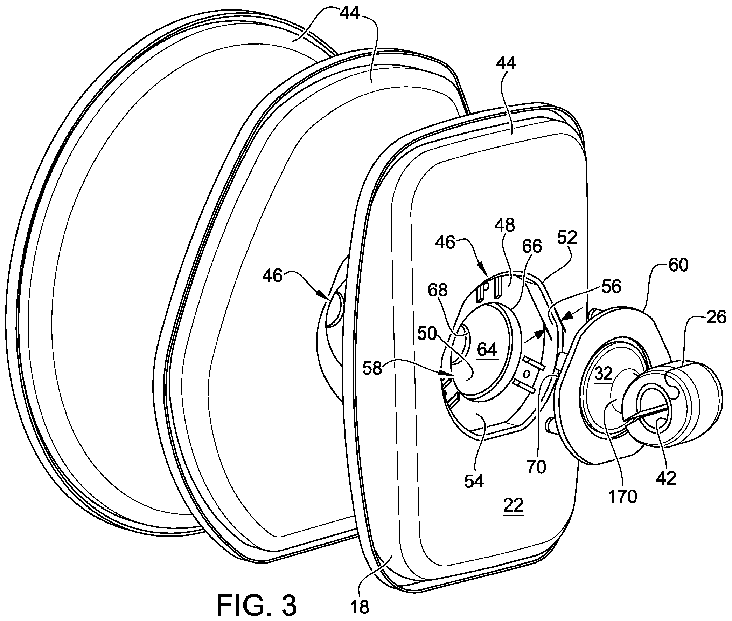

FIG. 3 shows three examples of possible embodiments of mirror assembly 10 formed by combining module 26 with three different styles of mirror heads 44 having various shape and color options. A mirror head option shown nearest to module 26 in FIG. 3 is light gray in color, but is otherwise identical in shape to mirror head 14. Accordingly, common structural features among the various embodiments share identical reference numbers in this disclosure. For example, common to the embodiments is an open ended two-level depression 46 molded in back side 22 of housing 18.

Depression 46 has an upper level 48 and a lower level 50. Upper level 48 of depression 46 is a recessed portion that has a perimeter 52 defining an opening in back side 22 and that has an annular floor 54 set a distance 56 below back side 22. Annular floor 54 has a central opening 58. Perimeter 52 is configured and distance 56 is set to receive a flush-mountable retainer 60 of module 26. Retainer 60, in some embodiments, is in the shape of a ring that has an inner surface 62 (FIGS. 4-6). Lower level 50 of depression 46 is a truncated hemispherical portion having a concave inner surface 64 with a wider end that is defined by a larger central opening 66 in annular floor 54 of upper level 48 and with a narrower end that is defined by a smaller central opening 68 near a void section of the truncated hemispherical portion that would otherwise provide its apex.

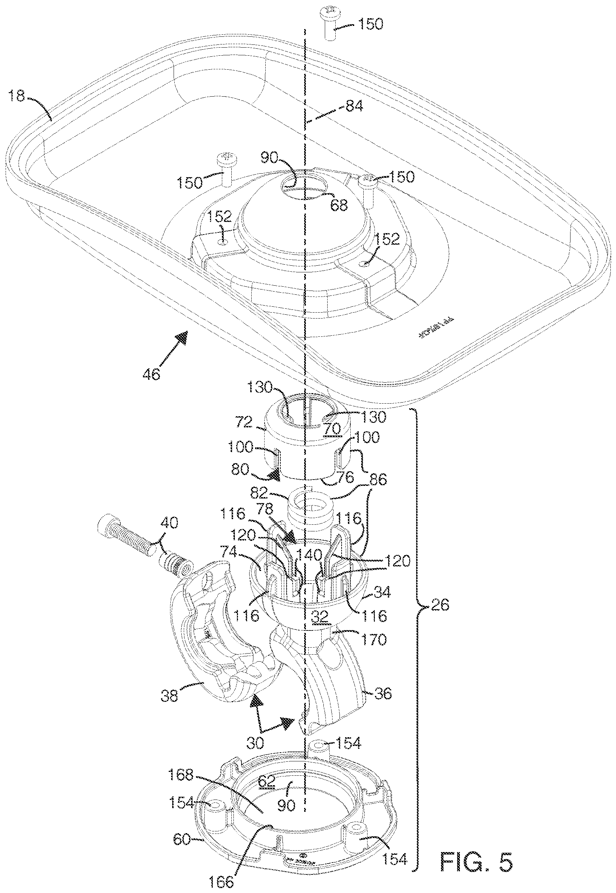

Concave inner surface 64 of lower level 50 is of complementary shape to that of an annular arcuate (or beveled) bearing surface 70 of a generally cylindrical cup 72 (FIGS. 4 and 5) of module 26. Likewise, inner surface 62 of retainer 60 is of complementary shape to that of outer surface 32 of cup 34 of module 26. Cup 34 and cup 72 fit together and are secured as an assembly in housing 18 as described below. After cup 72 has been inserted into two-level depression 46, and after clamp portion 36 has been placed through retainer 60 and retainer 60 has then been set against annular floor 54 of upper level 48 of depression 46, outer surface 32 of cup 34 can slide freely against inner surface 62 of retainer 60, and arcuate bearing surface 70 of cup 72 can slide freely against concave inner surface 64 of lower level 50. This arrangement enables a user to manipulate module 26 in circumduction, the characteristic movement of a true ball-and-socket joint.

FIGS. 4 and 5 show in greater detail how embodiments of the present disclosure lack the bolts or rods found in previous ball-and-socket mechanisms, yet achieve a desired stiffness of the joint for maintaining an adjustment position of mirror head 14. Hemispherical cup 34 has a wider opening 74, and generally cylindrical cup 72 has a narrower opening 76. Internally positioned between wider opening 74 and narrower opening 76-i.e., within a first inner cavity 78 of cup 34 and a second inner cavity 80 of cup 72-is a coil spring 82 seated against inner portions (described later in detail) of cup 34 and cup 72. Moreover, cup 34 and cup 72 freely move relative to each other in along a longitudinal axis 84 defined by spring 82-no fastener directly connects cups 34 and 72 to each other. Thus, cup 34 and cup 72 are brought together to retain spring 82 inside and form a multicomponent ball assembly 86, which is then nested within a multicomponent socket assembly 90. Accordingly, spring 82 pushes against the inner portions of ball assembly 86. This force acts to separate cup 34 and cup 72 so that ball assembly 86 expands along a direction of longitudinal axis 84. When expansion occurs while ball assembly 86 is retained in socket assembly 90, the expansion maintains a mirror-adjustment position, as follows.

Cups 34 and 72 each have outer surfaces providing generally opposing outer bearing surfaces 32 and 70. Specifically, surface 32 of hemispherical cup 34 is a spherical bearing surface, whereas surface 70 of cylindrical cup 72 is an annular bearing surface. When hemispherical cup 34 and cylindrical cup 72 are mated upon assembly (as described below), they are forced apart by internally mounted spring 82 such that bearing surfaces 32 and 70 are pressed against corresponding surfaces 62 and 64 that define socket assembly 90. Spring 82 applies a generally constant load to both upper and lower outer surfaces of ball assembly 86 so that these outer surfaces contact corresponding surfaces of socket assembly 90. The resulting static friction of the surface contact maintains a desired adjustment position between clamp 30 and mirror head 14 so that the latter is repositionable upon application of a force sufficient to generate dynamic frictional movement (i.e., sliding) of surfaces 32 and 70 against surfaces 62 and 64, respectively.

The mating of cups 34 and 72, mounting of spring 82 therein, and assembly of module 26 in mirror head 14 is described in the following three paragraphs.

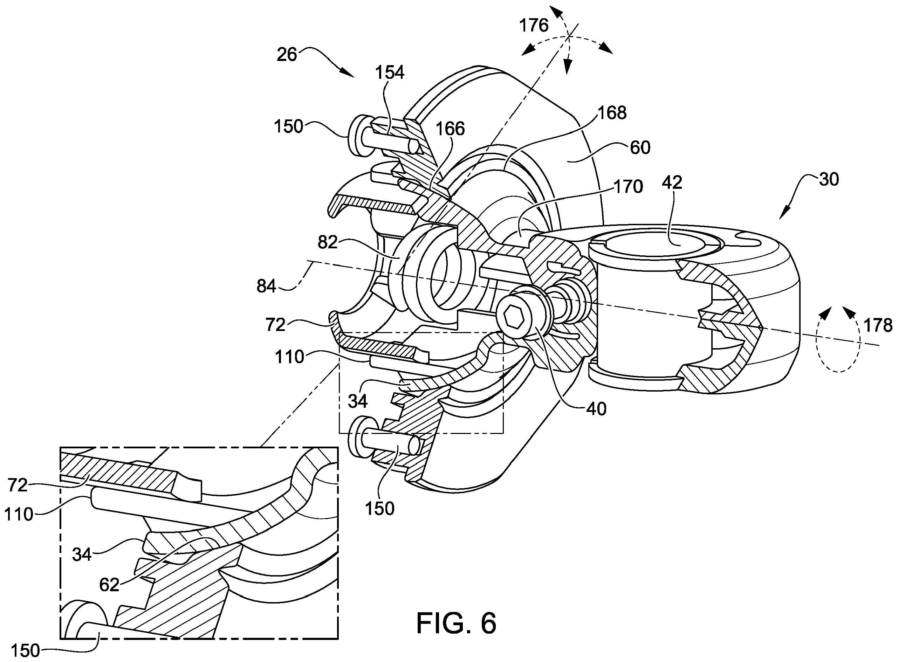

FIG. 4 shows cylindrical cup 72 having four slits 100 through and circumferentially spaced-apart around the side of cup 72. Similarly, four fingers 110 are circumferentially spaced-apart around near and extending away from wider opening 74 of hemispherical cup 34. Adjacent ones of fingers 110 are mutually spaced apart by 90°, have outer surfaces from which stability ridges 116 outwardly extend, and have inner surfaces from which ramped fins 120 (FIG. 5) inwardly extend. Slits 100 are, therefore, sized and positioned to receive corresponding ones of ramped fins 120 when hemispherical cup 34 and cylindrical cup 72 are aligned and assembled (see, e.g., FIG. 6). In the mated condition, slits 100 allow ramped fins 120 to slide axially, which facilitates axial-while inhibiting rotational-relative movement between cups 34 and 72.

FIGS. 4 and 5 also show details of how cups 34 and 72 retain spring 82. With reference to FIG. 4, at one end of spring 82, four stepped fins 130 are circumferentially spaced around and radially extend inwardly from an inner surface of cylindrical cup 72. Stepped fins 130 are offset 45° from different ones of four slits 100 and include a first set of seats 132 functioning as a retainer platform against which spring 82 rests. With reference to FIG. 5, at another end of spring 82, ramped fins 120 of hemispherical cup 34 include a second set of seats 140 on which that end of spring 82 is seated. Accordingly, the opposing ends of spring 82 are seated against flat retainer surfaces (located inside first inner cavity 78 and second inner cavity 80 of cup 34 and cup 72, respectively) when wider opening 74 of hemispherical cup 34 receives narrower opening 76 of cylindrical cup 72. The stiffness of the ball-and-socket joint is set by the compressive force of spring 82, which is a function of the axial distance between first set of seats 132 and second set of seats 140. Therefore, to increase the stiffness of the joint, spring 82 can be further compressed by, for example, placing a washer on first set of seats 132 or second set of seats 140 so that it confronts an end of spring 82 and thereby further compresses it when module 26 is assembled and mounted to mirror head 14.

Multicomponent socket assembly 90 includes retainer 60 that fits into upper level 48 of depression 46 in back side 22 of housing 18. Retainer 60 and back side 22 confront and bind surfaces 32 and 70 between the respective inner surfaces 62 and 64 when fasteners 150 extend through apertures 152 of upper level 48 and into corresponding barrels 154 of retainer 60 to retain module 26 in housing 18.

The set of screws that comprise fasteners 150 serves as a connector that mechanically connects retainer 60 to mirror housing 18. Skilled persons will appreciate, however, that there are various other ways to connect a retainer to a mirror housing. For example, fasteners 150, apertures 152, and barrels 154 may be substituted by other types of connectors including welds, adhesives, or mechanical clip devices. In another embodiment, a modified retainer includes an annular outer surface bearing male threads that allow the retainer to screw into corresponding female threads set in an upper level of a modified two-level depression molded in a back side of mirror housing. Also, the tightness of the connector may also serve to set the tension of spring 82, according to some embodiments.

FIG. 6 shows retainer 60 including in its inner central portion an arcuate (or beveled) flange 166, establishing inner surface 62, of complementary shape to that of spherical annular bearing surface 32 of hemispherical cup 34. Flange 166 has a fairly wide aperture 168 that allows a mounting arm 170 of clamp 30 freedom of circumduction 176 as well as freedom of rotation 178. The range of circumduction 176 and rotation 178 about axis 84 observed exceeds that of prior art designs because there is no axial member in module 26 to interfere with the desired movement. Module 26 also departs from some designs in that it can be readily rotated and twisted at any angular position. Furthermore, because the resulting joint lacks a central rod or bolt, optional apertures in cup 72 and lower level 50 (e.g., small central opening 68, FIGS. 3-5) allow debris to readily escape the interior of the joint.

FIG. 6 includes an enlarged view of the contact areas showing that they provide smooth, high-torque adjustment of mirror head 14. Experiments subjecting mirror assembly 10 to mechanical wear and temperature tests showed that, after about 10,000 actuations of mirror head 14 relative to mounting arm 170, measured ball-joint torque varied little. High/low temperature testing also showed little variation in measured ball-joint torque. Thus, spring loading provides for smooth adjustment and high torque over a wide temperature range (from about -40°C to about +85°C). Although the high-temperature testing was limited to +85°C-which would suffice for most practical applications-a mirror assembly may be constructed without the use of acrylonitrile butadiene styrene (ABS) or other materials sensitive to relatively higher temperatures, and could therefore conceivably accommodate temperatures up to +105°C.

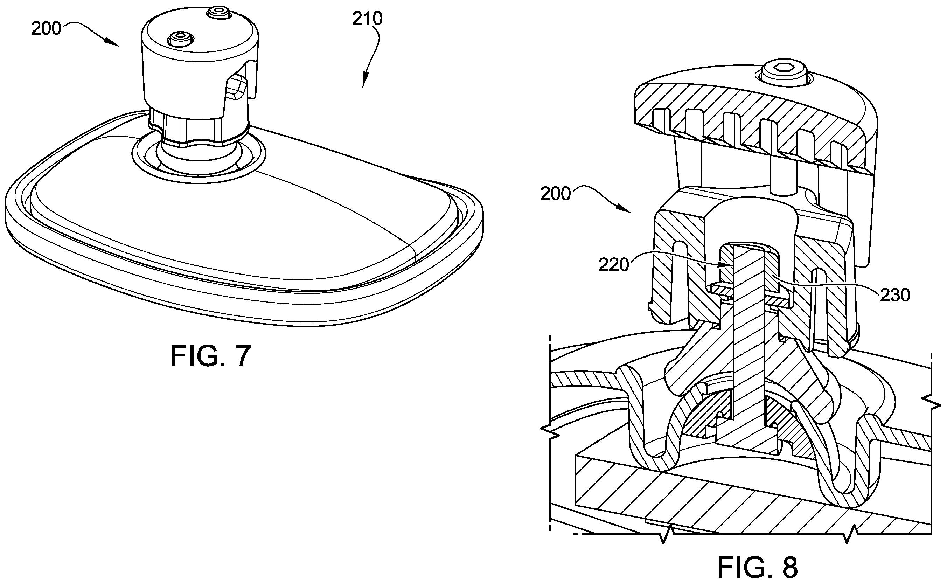

Similar types of tests conducted on more conventional designs produced results showing higher variability in torque and lower stability across the temperature range. In other words, the parts under test lost considerable torque during actuations and through the temperature range. For example, FIGS. 7 and 8 show and describe an embodiment of a typical manual adjustment device 200 for a mirror head 210, in which device 200 relies on non-adjustable loading. When device 200 is subjected to high and low temperatures, expansion and contraction of its materials result in undesirable variations in torque used during adjustment. In addition, as axially directed force is applied to the joint through a nut and bolt assembly 220, then, depending on the tightness of a nyloc nut 230, the force applied to underlying bearing surfaces may be inconsistent and result in inconsistent adjustment torque thresholds among different assemblies. And when wear occurs between parts, such force reduces, and hence the torque on the head also reduces. Thus, device 200 is more susceptible to variations in environmental conditions and component wear compared to mirror assembly 10 described with reference to FIGS. 1-6.

FIG. 9 shows a left-side half 236 and a right-side half 238 of insert 42. Each half has an outer plastic shell 240 and an inner rubber pad 242. Outer plastic shell 240 is a 40% glass fiber (GF) polyamide (Nylon) 6 (PA6) material that reduces compression of insert 42 during assembly. This allows greater clamping force to be applied to the mirror-mounting shaft of a vehicle, and hence increases the threshold of rotational torque to rotate mirror assembly 10 around the mirror-mounting shaft of a vehicle. Inner rubber pad 242 is overmolded into outer plastic shell 240 and is made from a natural rubber, e.g., maximum 0.5 millimeter (mm) thickness having shore hardness of 70 or greater. Natural rubber provides a greater coefficient of friction than that of synthetic rubbers, which enhances the coefficient of friction between clamp 30 and the mirror-mounting shaft, and hence also increases the threshold of the rotational torque to rotate mirror assembly 10 around the mirror-mounting shaft. The thickness of less than 0.5 mm reduces the shear effect of the rubber under rotational loading. The shore hardness of greater than 70 provides improved compression resistance during mounting.

Skilled persons will understand that many changes may be made to the details of the above-described embodiments without departing from the underlying principles of the disclosure. The scope of the present invention should, therefore, be determined only by the following claims.

## Claims

1. A mirror assembly (10) including a mirror (16) that forms part of a mirror head (14) to which a ball-and-socket joint module is mountable, the ball-and-socket joint module facilitating movement of the mirror head in response to an adjustment force applied by a user to adjust the mirror to a desired set position, comprising:
a multicomponent ball assembly (86) including first (34) and second (72) cups that have respective first (78) and second (84) inner cavities in which a spring (82) is seated, the first and second cups having respective first (32) and second (74) outer bearing surfaces, and the first and second cups (34, 72) configured to fit together to contain the spring (82) seated in the first and second inner cavities (78, 84) and to move closer to and farther from each other in response to forces applied by the spring (82) seated in the first and second inner cavities (78, 84);
a mirror mounting arm (170) positioned outside the second inner cavity of, and extending from, the second cup;
a multicomponent socket assembly (90) including a mirror housing (18) that forms part of the mirror head (14) and a retainer (60) that has a central aperture, the mirror housing having a depression forming a first portion of the multicomponent socket assembly and receiving the first outer bearing surface of the first cup, and the retainer having a surface forming a second portion of the multicomponent socket assembly (90) and receiving the second outer bearing surface (74) of the second cup (72), the mirror mounting arm extending through the central aperture of the retainer; and
a connector securing together the mirror housing and the retainer of the multicomponent socket assembly so that the first and second portions of the multicomponent socket assembly contact, respectively, the first and second outer bearing surfaces (32, 74) of the multicomponent ball assembly and thereby compress the spring (82) seated in the first and second cavities (78, 84), the compressed spring (82) pressing the first and second cups (34, 72) against the respective first and second portions with a retention force of sufficient magnitude that allows the user to apply the adjustment force to move the mirror mounting arm in circumduction and rotation when adjusting the mirror to the desired set position and retain it there when the user stops applying the adjustment force, **characterized in that** one of the first or second cup includes longitudinally extending alignment fins (120) and the other one of the first or second cup (34, 72) includes slits (100) to receive the longitudinally extending alignment fins, the longitudinally extending alignment fins (120) being slidable in the slits (100) to guide axial movement of the first and second cups relative to each other.

2. The mirror assembly of claim 1 in which the first and second cups (34, 72) are matable to restrain lateral and rotational movement of the first and second cups (34, 72) relative to each other.

3. The mirror assembly of claim 1 in which the first and second cups (34, 72) each include a seat (132, 140), and in which free ends of the spring (82) press against the seats of the first and second cups.

4. The mirror assembly of claim 1 in which the second cup (72) comprises a hemispherical cup having a domed outer surface forming the second outer bearing surface configured to slide against the surface of the retainer.

5. The mirror assembly of claim 1 in which the first cup (34) comprises a cylindrical cup having an arcuate outer surface forming the first outer bearing surface configured to slide against the first portion of the multicomponent socket assembly.

6. The mirror assembly of claim 1 in which the ball-and-socket joint module facilitates 360° rotation of the mirror.

7. The mirror assembly of claim 1 in which the central aperture of the retainer (60) defines a circular open region within which the mirror mounting arm is movable.

8. The mirror assembly of claim 1 in which the connector comprises a set of screws (150).

9. The mirror assembly of claim 1 in which the spring comprises a coil spring.

10. The mirror assembly of claim 1 in which the mirror mounting arm terminates in a clamp (30).

11. The mirror assembly of claim 10 in which the clamp (30) comprises a first clamp portion (36) integral to the mirror mounting arm and a second clamp portion (38) that is fastened to the first clamp portion after the first clamp portion is passed through the central aperture of the retainer.

12. The mirror assembly of claim 10 in which the clamp comprises a cylindrical interior surface, the mirror assembly further comprising a tubular insert mountable to the cylindrical interior surface of the clamp, the tubular insert having an inner tubular surface configured to receive a mirror-mounting shaft of a vehicle for mounting the mirror assembly.

13. The mirror assembly of claim 1, further comprising a rear-view mirror device for a vehicle.

14. The mirror assembly of any preceding claim in which an inside opening of the spring (82) is free from a rod.

## Patentansprüche

1. Spiegelanordnung (10), die einen Spiegel (16) einschließt, der einen Teil eines Spiegelkopfs (14) ausbildet, an dem ein Kugelgelenkmodul montierbar ist, wobei das Kugelgelenkmodul eine Bewegung des Spiegelkopfs als Reaktion auf eine Einstellkraft zu ermöglichen, die durch einen Benutzer aufgebracht wird, um den Spiegel in eine gewünschte festgelegte Position einzustellen, umfassend:
eine Mehrkomponentenkugelanordnung (86), die eine erste (34) und eine zweite (72) Schale einschließt, die jeweils einen ersten (78) und einen zweiten (84) inneren Hohlraum aufweisen, in denen eine Feder (82) sitzt, wobei die erste und die zweite Schale jeweils eine erste (32) und eine zweite (74) äußere Lageroberfläche aufweisen, und wobei die erste und die zweite Schale (34, 72) konfiguriert sind, um zusammenzupassen, um die Feder (82) zu enthalten, die in dem ersten und dem zweiten inneren Hohlraum (78, 84) sitzt, und um sich näher zueinander und weiter voneinander weg zu bewegen als Reaktion auf Kräfte, die durch die Feder (82) aufgebracht werden, die in dem ersten und dem zweiten inneren Hohlraum (78, 84) sitzt;
einen Spiegelmontagearm (170), der außerhalb des zweiten inneren Hohlraums der zweiten Schale positioniert ist und sich daraus erstreckt;
eine Mehrkomponentenfassungsanordnung (90), die ein Spiegelgehäuse (18), das einen Teil des Spiegelkopfs (14) ausbildet, und eine Halterung einschließt (60), die eine zentrale Öffnung aufweist, wobei das Spiegelgehäuse eine Vertiefung aufweist, die einen ersten Abschnitt der Mehrkomponentenfassungsanordnung ausbildet und die erste äußere Lageroberfläche der ersten Schale aufnimmt, und wobei die Halterung eine Oberfläche aufweist, die einen zweiten Abschnitt der Mehrkomponentenfassungsanordnung (90) ausbildet und die zweite äußere Lageroberfläche (74) der zweiten Schale (72) aufnimmt, wobei sich der Spiegelmontagearm durch die zentrale Öffnung der Halterung erstreckt; und
einen Verbinder, der das Spiegelgehäuse und die Halterung der Mehrkomponentenfassungsanordnung zusammenhält, sodass der erste beziehungsweise der zweite Abschnitt der Mehrkomponentenfassungsanordnung die erste und die zweite äußere Lageroberfläche (32, 74) der Mehrkomponentenfassungsanordnung berühren und wobei dadurch die Feder (82) zusammengedrückt wird, die in dem ersten und dem zweiten Hohlraum (78, 84) sitzt, wobei die zusammengedrückte Feder (82) die erste und die zweite Schale (34, 72) gegen den jeweiligen ersten und zweiten Abschnitt mit einer Haltekraft ausreichender Größe drückt, die dem Benutzer erlaubt, die Einstellkraft aufzubringen, um den Spiegelmontagearm bei einem Einstellen des Spiegels in die gewünschte festgelegte Position umlaufend und drehend zu bewegen und ihn dort zu halten, wenn der Benutzer aufhört, die Einstellkraft aufzubringen, **dadurch gekennzeichnet, dass** die erste oder die zweite Schale sich in Längsrichtung erstreckende Ausrichtungsrippen (120) einschließt und die andere von der ersten oder der zweiten Schale (34, 72) Schlitze (100) einschließt, um die sich in Längsrichtung erstreckenden Ausrichtungsrippen aufzunehmen, wobei die sich in Längsrichtung erstreckenden Ausrichtungsrippen (120) in den Schlitzen (100) gleitfähig sind, um eine axiale Bewegung der ersten und der zweiten Schale relativ zueinander zu führen.

2. Spiegelanordnung nach Anspruch 1, in der die erste und die zweite Schale (34, 72) zusammengefügt werden können, um eine Seitwärts- und eine Drehbewegung der ersten und der zweiten Schale (34, 72) relativ zueinander einzuschränken.

3. Spiegelanordnung nach Anspruch 1, in der die erste und die zweite Schale (34, 72) jeweils einen Sitz (132, 140) einschließen und in der freie Enden der Feder (82) gegen die Sitze der ersten und der zweiten Schale drücken.

4. Spiegelanordnung nach Anspruch 1, in der die zweite Schale (72) eine halbkugelförmige Schale umfasst, die eine gewölbte Außenoberfläche aufweist, die die zweite äußere Lageroberfläche ausbildet, die konfiguriert ist, um gegen die Oberfläche der Halterung zu gleiten.

5. Spiegelanordnung nach Anspruch 1, in der die erste Schale (34) eine zylindrische Schale umfasst, die eine bogenförmige Außenoberfläche aufweist, die die erste äußere Lageroberfläche ausbildet, die konfiguriert ist, um gegen den ersten Abschnitt der Mehrkomponentenfassungsanordnung zu gleiten.

6. Spiegelanordnung nach Anspruch 1, in der das Kugelgelenkmodul eine 360°-Drehung des Spiegels ermöglicht.

7. Spiegelanordnung nach Anspruch 1, in der die zentrale Öffnung der Halterung (60) einen kreisförmigen offenen Bereich definiert, innerhalb welchem der Spiegelmontagearm bewegbar ist.

8. Spiegelanordnung nach Anspruch 1, in der der Verbinder einen Satz von Schrauben (150) umfasst.

9. Spiegelanordnung nach Anspruch 1, in der die Feder eine Schraubenfeder umfasst.

10. Spiegelanordnung nach Anspruch 1, in der der Spiegelmontagearm in einer Klemme (30) endet.

11. Spiegelanordnung nach Anspruch 10, in der die Klemme (30) einen ersten Klemmenabschnitt (36), der mit dem Spiegelmontagearm integral ist, und einen zweiten Klemmabschnitt (38) umfasst, der an dem ersten Klemmenabschnitt befestigt wird, nachdem der erste Klemmenabschnitt durch die zentrale Öffnung der Halterung passiert wurde.

12. Spiegelanordnung nach Anspruch 10, in der die Klemme eine zylindrische Innenoberfläche umfasst, wobei die Spiegelanordnung ferner einen rohrförmigen Einsatz umfasst, der an der zylindrischen Innenoberfläche der Klemme montierbar ist, wobei der rohrförmige Einsatz eine rohrförmige Innenoberfläche aufweist, die konfiguriert ist, um eine Spiegelmontagewelle eines Fahrzeugs zum Montieren der Spiegelanordnung aufzunehmen.

13. Spiegelanordnung nach Anspruch 1, ferner umfassend eine Rückspiegelvorrichtung für ein Fahrzeug.

14. Spiegelanordnung nach einem der vorhergehenden Ansprüche, in der eine Innenaussparung der Feder (82) frei von einer Stange ist.

## Revendications

1. Ensemble viseur (10) comportant un viseur (16) qui fait partie d'une tête de viseur (14) sur laquelle un module d'articulation à rotule peut être monté, le module d'articulation à rotule facilitant le mouvement de la tête de viseur en réponse à une force de réglage appliquée par un utilisateur pour régler le viseur à une position souhaitée, comprenant :
un ensemble bille à composants multiples (86) comportant des première (34) et seconde (72) coupelles qui ont des première (78) et seconde (84) cavités intérieures respectives dans lesquelles un ressort (82) est logé, les première et seconde coupelles ayant respectivement une première (32) et seconde (74) surfaces d'appui externes, et les première et seconde coupelles (34, 72) étant conçues pour s'emboîter pour contenir le ressort (82) logé dans les première et seconde cavités internes (78, 84) et pour être rapprochée ou éloignée l'une de l'autre en réponse aux forces appliquées par le ressort (82) logé dans les première et seconde cavités internes (78, 84) ;
un bras de montage de viseur (170) positionné à l'extérieur de la seconde cavité interne de la seconde coupelle et s'étendant depuis celle-ci ;
un ensemble douille à composants multiples (90) comportant un boîtier de viseur (18) qui fait partie de la tête de viseur (14) et un dispositif de maintien (60) qui a une ouverture centrale, le boîtier de viseur ayant un creux formant une première partie de l'ensemble douille à composants multiples et recevant la première surface d'appui externe de la première coupelle, et le dispositif de maintien ayant une surface formant une seconde partie de l'ensemble douille à composants multiples (90) et recevant la seconde surface d'appui externe (74) de la seconde coupelle (72), le bras de montage de viseur s'étendant à travers l'ouverture centrale du dispositif de maintien ; et
un raccord fixant ensemble le boîtier de viseur et le dispositif de maintien de l'ensemble douille à composants multiples de sorte que les première et seconde parties de l'ensemble douille à composants multiples entrent respectivement en contact avec les première et seconde surfaces d'appui externes (32, 74) de l'ensemble bille à composants multiples et compriment ainsi le ressort (82) logé dans les première et seconde cavités (78, 84), le ressort comprimé (82) pressant les première et seconde coupelles (34, 72) contre les première et seconde parties respectives avec une force de retenue d'une amplitude suffisante qui permet à l'utilisateur d'appliquer la force de réglage pour déplacer le bras de montage de viseur en circonduction et en rotation lors du réglage du viseur à la position souhaitée et de l'y maintenir lorsque l'utilisateur cesse d'appliquer la force de réglage, **caractérisé en ce que** soit la première, soit la seconde coupelle comporte des ailettes d'alignement (120) s'étendant longitudinalement et l'autre soit de la première, soit de la seconde coupelle (34, 72) comporte des fentes (100) pour recevoir les ailettes d'alignement s'étendant longitudinalement, les ailettes d'alignement s'étendant longitudinalement (120) pouvant coulisser dans les fentes (100) pour guider le mouvement axial des première et seconde coupelles l'une par rapport à l'autre.

2. Ensemble viseur selon la revendication 1, dans lequel les première et seconde coupelles (34, 72) peuvent être accouplées pour restreindre le mouvement latéral et rotatif des première et seconde coupelles (34, 72) l'une par rapport à l'autre.

3. Ensemble viseur selon la revendication 1, dans lequel les première et seconde coupelles (34, 72) comportent chacune une embase (132, 140), et dans lequel les extrémités libres du ressort (82) appuient contre les embases des première et seconde coupelles.

4. Ensemble viseur selon la revendication 1, dans lequel la seconde coupelle (72) comprend une coupelle hémisphérique ayant une surface externe bombée formant la seconde surface d'appui externe conçue pour coulisser contre la surface du dispositif de maintien.

5. Ensemble viseur selon la revendication 1, dans lequel la première coupelle (34) comprend une coupelle cylindrique ayant une surface externe arquée formant la première surface d'appui externe conçue pour coulisser contre la première partie de l'ensemble douille à composants multiples.

6. Ensemble viseur selon la revendication 1, dans lequel le module d'articulation à rotule facilite la rotation à 360° du viseur.

7. Ensemble viseur selon la revendication 1, dans lequel l'ouverture centrale du dispositif de maintien (60) définit une région ouverte circulaire à l'intérieur de laquelle le bras de montage de viseur est mobile.

8. Ensemble viseur selon la revendication 1, dans lequel le raccord comprend un jeu de vis (150).

9. Ensemble viseur selon la revendication 1, dans lequel le ressort comprend un ressort hélicoïdal.

10. Ensemble viseur selon la revendication 1, dans lequel le bras de montage de viseur se termine par une bride de fixation (30).

11. Ensemble viseur selon la revendication 10, dans lequel la bride de fixation (30) comprend une première partie de bride de fixation (36) intégrée au bras de montage de viseur et une seconde partie de bride de fixation (38) qui est attachée à la première partie de bride de fixation après le passage de la première partie de bride de fixation à travers l'ouverture centrale du dispositif de maintien.

12. Ensemble viseur selon la revendication 10, dans lequel la bride de fixation comprend une surface intérieure cylindrique, l'ensemble viseur comprenant en outre un insert tubulaire pouvant être monté sur la surface intérieure cylindrique de la bride de fixation, l'insert tubulaire ayant une surface tubulaire interne conçue pour recevoir un arbre de montage de viseur d'un véhicule pour le montage de l'ensemble viseur.

13. Ensemble viseur selon la revendication 1, comprenant en outre un dispositif de rétroviseur pour un véhicule.

14. Ensemble viseur selon l'une quelconque des revendications précédentes, dans lequel une ouverture intérieure du ressort (82) est dépourvue d'une tige.
